(19) Europäisches Patentamt / European Patent Office / Office européen des brevets

(11) **EP 3 949 480 B1**

(12) **EUROPEAN PATENT SPECIFICATION**

(45) Date of publication and mention
of the grant of the patent:
**04.10.2023 Bulletin 2023/40**

(21) Application number: **20840518.3**

(22) Date of filing: **23.06.2020**

(51) International Patent Classification (IPC):
*H04W 76/19* (2018.01)      *H04W 16/28* (2009.01)
*H04W 76/15* (2018.01)

(52) Cooperative Patent Classification (CPC):
**H04W 76/19; H04W 16/28; H04W 76/15**

(86) International application number:
**PCT/CN2020/097695**

(87) International publication number:
**WO 2021/008316 (21.01.2021 Gazette 2021/03)**

(54) **APPARATUSES AND METHODS OF BEAM FAILURE RECOVERY FOR SECONDARY CELL**

VORRICHTUNGEN UND VERFAHREN ZUR STRAHLAUSFALLWIEDERHERSTELLUNG FÜR
SEKUNDÄRZELLEN

APPAREILS ET PROCÉDÉS DE REPRISE APRÈS DÉFAILLANCE DE FAISCEAU POUR UNE
CELLULE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2019 US 201962873523 P**

(43) Date of publication of application:
**09.02.2022 Bulletin 2022/06**

(73) Proprietor: **GUANGDONG OPPO MOBILE
TELECOMMUNICATIONS
CORP., LTD.
Dongguan, Guangdong 523860 (CN)**

(72) Inventor: **GUO, Li
Allen Texas 75013 (US)**

(74) Representative: **Taor, Simon Edward William et al
Venner Shipley LLP
200 Aldersgate
London EC1A 4HD (GB)**

(56) References cited:
**WO-A1-2019/027294      WO-A1-2019/032882
WO-A1-2019/135654      US-A1- 2019 037 498**

• **QUALCOMM INCORPORATED: "Enhancements
on Multi-beam Operation", 3GPP DRAFT;
R1-1907290 ENHANCEMENTS ON MULTI-BEAM
OPERATION, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1, no. Reno, USA; 20190513 - 20190517 13 May
2019 (2019-05-13), XP051728730, Retrieved from
the Internet:
URL:http://www.3gpp.org/ftp/Meetings%5F3GP
P%5FSYNC/RAN1/Docs/R1%2D1907290%2Ezip
[retrieved on 2019-05-13]**
• **INTEL CORPORATION: "Summary 3 on SCell
BFR and L1-SINR", 3GPP DRAFT; R1-1905844
SUMMARY ON SCELL BFR AND L1-SINR_V7,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE , vol. RAN
WG1, no. Xi'an, China; 20190408 - 20190412 15
April 2019 (2019-04-15), XP051707890, Retrieved
from the Internet:
URL:http://www.3gpp.org/ftp/tsg%5Fran/WG1%
5FRL1/TSGR1%5F96b/Docs/R1%2D1905844%2
Ezip [retrieved on 2019-04-15]**

- **SAMSUNG: "Enhancements on multi-beam operations", 3GPP DRAFT; R1-1902306 R16 MULTI-BEAM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 15 February 2019 (2019-02-15), XP051600000, Retrieved from the Internet: URL:http://www.3gpp.org/ftp/tsg%5Fran/WG1% 5FRL1/TSGR1%5F96/Docs/R1%2D1902306%2Ez ip [retrieved on 2019-02-15]**
- **HUAWEI, et al.: "Beam failure recovery for SCell", 3GPP TSG RAN WG1 Meeting #96bis R1-1903977, 12 April 2019 (2019-04-12), XP051691199,**

# EP 3 949 480 B1

## Description

BACKGROUND OF DISCLOSURE

### 1. Field of Disclosure

The present disclosure relates to the field of communication systems, and more particularly, to apparatuses and methods of a beam failure recovery for a secondary cell.

### 2. Description of Related Art

In current designs, a beam failure recovery (or called a link recovery) function is only supported for a primary cell (PCell). A method specified for a PCell link recovery is not applicable to a secondary cell (SCell). In a deployment scenario, the PCell and the SCell are on different bands, a beam monitoring on the PCell cannot provide any information for the SCell. Thus, a dedicated beam failure detection and recovery function is needed for the SCell.

Therefore, there is a need for an apparatus and a method of a beam failure recovery for a secondary cell (SCell).

WO 2019/15654 A1 describes an apparatus and method of beam recovery on Scell. Further documents of the prior art are document QUALCOMM INCORPORATED: "Enhancements on Multi-beam Operation", 3GPP DRAFT; R1-1907290 ENHANCEMENTS ON MULTI-BEAM OPERATION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Reno, USA; 20190513 - 20190517, 13 May 2019, Retrieved from the Internet: URL:http://www.3gpp.org/ftp/Meetings%5F3GPP%5FSYNC/RAN1/Docs/R1%2D1907290%2Ezip, document INTEL CORPORATION: "Summary 3 on SCell BFR and L1-SINR", 3GPP DRAFT; R1-1905844 SUMMARY ON SCELL BFR AND L1-SINR_V7, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,vol. RAN WG1, no. Xi an, China; 20190408 - 20190412 15 April 2019, Retrieved from the Internet:URL:http://www.3gpp.org/ftp/tsg%5Fran/WG1%5FRL1/TSGR1%5F96b/Docs/R1%2D1905844%2Ezip, document SAMSUNG: "Enhancements on multi-beam operations",3GPP DRAFT; R1-1902306 R16 MULTI-BEAM, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Athens, Greece; 20190225 - 20190301 15 February 2019, Retrieved from the Internet: URL:http://www.3gpp.org/ftp/tsg%5Fran/WG1%5FRL1/TSGR1%5F96/Docs/R1%2D1902306%2Ezip, document WO 2019/027294 A1, document WO 2019/032882 A1 and document HUAWEI, et al.: "Beam failure recovery for SCell",3GPP TSG RAN WG1 Meeting #96bis R1-1903977, 12 April 2019.

## SUMMARY

An object of the present disclosure is to propose apparatuses and methods of a beam failure recovery for a secondary cell (SCell) capable of providing high reliability.

In a first aspect of the present disclosure, a method of a beam failure recovery for a secondary cell, performed by a user equipment, is provided according to claim 1.

In a second aspect of the present disclosure, a user equipment (UE) is provided according to claim 5.

In a third aspect of the present disclosure, a method of a beam failure recovery for a secondary cell, performed by a base station, is provided according to claim 9.

In a fourth aspect of the present disclosure, a base station is provided according to claim 13.

## BRIEF DESCRIPTION OF DRAWINGS

In order to more clearly illustrate the embodiments of the present disclosure or related art, the following figures will be described in the embodiments are briefly introduced. It is obvious that the drawings are merely some embodiments of the present disclosure, a person having ordinary skill in this field can obtain other figures according to these figures without paying the premise.

FIG. 1 illustrates a transmitter block diagram for a downlink (DL) or uplink (UL) transmission.
FIG. 2 illustrates a receiver block diagram for receiving a DL or UL transmission.
FIG. 3 is a block diagram of a user equipment (UE) and a base station of a beam failure recovery for a secondary cell (SCell).
FIG. 4 is a flowchart illustrating a method of a beam failure recovery for a secondary cell (SCell) for a UE.
FIG. 5 is a flowchart illustrating a method of a beam failure recovery for a secondary cell (SCell) for a base station.

FIG. 6 is a schematic diagram illustrating reporting information for a beam failure recovery for a secondary cell (SCell).
FIG. 7 is a schematic diagram illustrating reporting information for a beam failure recovery for a secondary cell (SCell).
FIG. 8 is a schematic diagram illustrating reporting information for a beam failure recovery for a secondary cell (SCell).
FIG. 9 is a schematic diagram illustrating reporting information for a beam failure recovery for a secondary cell (SCell).
FIG. 10 is a schematic diagram illustrating reporting information for a beam failure recovery for a secondary cell (SCell).
FIG. 11 is a block diagram of a system for wireless communication.

DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

Fifth-generation (5G) wireless systems are generally a multi-beam based system in a frequency range 2 (FR2) ranging from 24.25 GHz to 52.6 GHz, where multiplex transmit (Tx) and receive (Rx) analog beams are employed by a base station (BS) and/or a user equipment (UE) to combat a large path loss in a high frequency band. In a high frequency band system, for example, mmWave systems, the BS and the UE are deployed with large number of antennas, so that a large gain beamforming can be used to defeat the large path loss and signal blockage. Due to the hardware limitation and cost, the BS and the UE might only be equipped with a limited number of transmission and reception units (TXRUs). Therefore, hybrid beamforming mechanisms can be utilized in both BS and UE. To get the best link quality between the BS and the UE, the BS and the UE need to align analog beam directions for a particular downlink or uplink transmission. For a downlink transmission, the BS and the UE need to find the best pair of a BS Tx beam and a UE Rx beam while for an uplink transmission, the BS and the UE need to find the best pair of the UE Tx beam and the BS Rx beam.

For a communication between one UE and a BS, the BS and the UE need to determine which Tx and Rx beam are going to be used. When one UE moves, the beams used by the BS and the UE for communication might change. In 3GPP 5G specification, the following functions are defined to support such multi-beam-based operation.

At an operation associated with beam measurement and reporting, in this function, the UE can measure one or multiple Tx beams of the BS and then the UE can select the best Tx beam and report his selection to the BS. By measuring the Tx beams of the BS, the UE can also measure one or more different Rx beams and then select the best Rx beam for one particular Tx beam of the BS. In this function, the gNB can also measure one or multiple Tx beams of the UE and then select the best Tx beam of the UE for an uplink transmission. To support measuring Tx beams of the BS, the BS can transmit multiple reference signal (RS) resources and then configures the UE to measure the RS resources. Then, the UE can report an index of one or more selected RS resources that are selected based on some measure metric, for example, a layer 1 reference signal received power (L1-RSRP). To support measuring Tx beams of the UE used for an uplink transmission, the BS can configure the UE to transmit one or more uplink RS resources, for example, sounding reference signal (SRS) resources, and then the BS can measure the RS resources. The BS can figure out which Tx beam of the UE is the best for the uplink transmission based on measuring, for example, L1-RSRP of the RS resources.

At an operation associated with beam indication, for a downlink transmission, the BS can indicate the UE of which Tx beam of the BS is used to transmit, so that the UE can use proper Rx beam to receive the downlink transmission. For a physical downlink control channel (PDCCH) transmission, the BS can indicate an identify (ID) of one Tx beam of the BS to the UE. For a physical sidelink discovery channel (PSDCH) transmission, the BS can use downlink control information (DCI) in a PDCCH to indicate the ID of one Tx beam that is used to transmit a corresponding PDSCH. For an uplink transmission from the UE, the BS can also indicate the UE of which Tx beam of the UE to be used. For example, for a physical uplink control channel (PUCCH) transmission, the UE uses a Tx beam that is indicated by the BS through a configuration of spatial relation information. For an SRS transmission, the UE uses the Tx beam that is indicated by the BS through the configuration of spatial relation information. For a physical uplink shared channel (PUSCH) transmission, the UE uses a Tx beam that indicated by an information element contained in a scheduling DCI.

At an operation associated with beam switch, this function is used by the BS to switch a Tx beam used for a downlink or uplink transmission. This function is useful when the Tx beam used for transmission currently is out of date due to for example a movement of the UE. When the BS finds a Tx beam currently used for a downlink transmission is not good or the BS finds another Tx beam that is better than the current Tx beam, the BS can send signaling to the UE to inform a change of Tx beam. Similarly, the BS can switch an uplink Tx beam of the UE used to transmit some uplink transmission.

In a communication system, such as a new radio (NR) system, DL signals can include control signaling conveying DCI through a PDCCH, data signals conveying information packet through a PDSCH and some types of reference signals. The DCI can indicate information of how the PDSCH is transmitted, including for example resource allocation and transmission parameters for the PDSCH. The BS can transmit one or more types of reference signals for different purposes, including a demodulation reference symbol (DM-RS) that is transmitted along with the PDSCH and can be used by the UE to demodulate the PDSCH, a channel state information reference signal (CSI-RS) that can be used by the UE to measure BS's Tx beam or CSI of a downlink channel between the BS and the UE, a phase tracking reference signal (PT-RS) that is also transmitted along with a PDSCH and can be used by the UE to estimate a phase noise caused by imperfection in a radio frequency (RF) part in a transmitter and a receiver and then compensate it when decoding the PDSCH. In NR, DL resource allocation for PDCCH, PDSCH, and reference signals is performed in a unit of orthogonal frequency division multiplexing (OFDM) symbols and a group of physical resource blocks (PRBs). Each PRB contains a few resource elements (REs), for example 12 REs, in a frequency domain. A transmission bandwidth (BW) of one downlink transmission consists of frequency resource unit called as resource blocks (RBs) and each RB consists of a few subcarriers or REs, for example, 12 subcarriers or 12 REs.

UL signals transmitted by the UE to the BS can include data signals conveying data packet through a PUSCH, uplink control signals conveying UL control information (UCI) which can be transmitted in the PUSCH or a PUCCH, and UL reference signals. The UCI can carry a schedule request (SR) used by the UE to request an uplink transmission resource, a hybrid automatic repeat request acknowledgement (HARQ-ACK) feedback for a PDSCH transmission or a channel state information (CSI) report. The UE can transmit one or more types of uplink reference signals for different purposes, including DM-RS that is transmitted along with a PUSCH transmission and can be used by the BS to demodulate the PUSCH, PT-RS that is also transmitted along with a PUSCH and can be used by the BS to estimate the phase noise caused by imperfection in RF parts and the BS then can compensate it when decoding PUSCH, and SRS signals that are used by the BS to measure one or more UE Tx beams or CSI of the uplink channel between the UE and the BS. Similarly, UL resource allocation for PUSCH, PUCCH, and UL reference signal is also performed in a unit of symbols and a group of PRBs.

A transmission interval for DL or UL channels/signals is referred to as a slot and each slot contains a few, for example 14, symbols in time domain. In a NR system, the duration of one slot can be 1, 0.5, 0.25 or 0.123 millisecond, for the subcarrier spacing 15KHz, 30KHz, 60KHz, and 120 KHz, respectively. NR systems support flexible numerologies and an embodiment can choose proper OFDM subcarrier spacing based on the deployment scenario and service requirement. In the NR system, DL and UL transmission can use different numerologies.

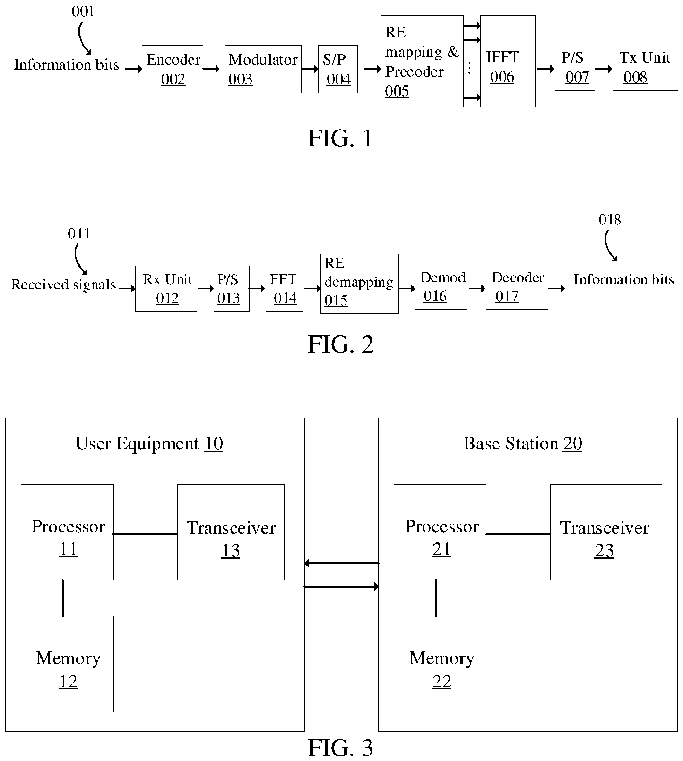

FIG. 1 illustrates a transmitter block diagram for a DL or UL transmission. An embodiment of the transmitter block illustrated in FIG. 1 is for illustration only. A transmitter block is not covered by the claimed invention. Other embodiments, also not covered by the claimed invention, could be used. Information bits 001 can be first encoded by an encoder 002 such as a low density parity check (LDPC) encoder or polar encoder, and then modulated by a modulator 003. The modulation can be, for example, binary phase-shift keying (BPSK), quadrature amplitude modulation (QAM) 4, QAM 16, QAM 64, or QAM 256. Then a serial to parallel (S/P) converter 004 can generate parallel multiple modulation symbols that are subsequently inputted to a RE mapper and precoder 005. The RE mapper and precoder 005 can map the modulation symbols to selected REs and then apply some precoder on the modulation symbols on the BW resource assigned to a DL or UL transmission. Then in 006, the modulation symbols are applied with an inverse fast fourier transform (IFFT) and an output thereof is then serialized by a parallel to serial (P/S) converter 007. Then the signals are sent to a Tx unit 008 including for example a digital-to-analog (D/A) convertor, a radio frequency convertor, a filter, a power amplified, and Tx antenna elements, and transmitted out.

FIG. 2 illustrates a receiver block diagram for receiving a DL or UL transmission. An embodiment of the receiver block illustrated in FIG. 2 is for illustration only. A receiver block is not covered by the claimed invention. Other embodiments, also not covered by the claimed invention, could be used. Received signals 011 are first passed through a Rx unit 012 including for example Rx antenna elements, a low noise power amplifier, radio frequency converters, and filters. And an output thereof is passed through a P/S 013 and then applied an FFT 014. After converting into a frequency domain, useful signals are extracted by a RE demapping 015 according to a resource allocation for the DL or UL transmission. Subsequently, a demod 016 demodulates data symbols with a channel estimation that is calculated based on DM-RS and then a decoder 017 such as LDPC decoder or polar decoder, decodes the demodulated data to output information bits 018.

In 3rd generation partnership project (3GPP) release 15, a beam failure recovery function for a primary cell (PCell) is specified, which can be called as a link recovery. To perform a beam failure recovery for the primary cell, a user equipment can be configured with a set of reference signals (RSs) as a beam failure detection (BFD) RS and another set of RSs as a new beam identification (NBI) RS. The UE can first monitor the RS configured as the BFD RS and use a hypocritical block error rate (BLER) as metric to detect a beam failure of a physical downlink control channel (PDCCH) in one active bandwidth part (BWP) in the primary cell. If the UE detects the beam failure and the UE also finds at least one NBI RS that has a reference signal received power (RSRP) larger than a configured threshold, the UE then transmits a random access channel (RACH) preamble in a given RACH resource occasion which are configured to be associated with one NBI RS that is selected by the UE. A transmission of the RACH preamble in a given RACH resource can be considered as a beam failure recovery request (BFRQ) to a gNB. If the gNB detects such a relay-assisted cellular network (RACN) preamble successfully, the gNB would use a quasi-co-location (QCL) assumption of the NBI RS indicated by the detected RACH preamble to transmit PDCCH in a search space that is dedicated for beam failure recovery response. After sending the RACH preamble as the BFRQ, the UE can begin to monitor the PDCCH in the dedicated search space and if a valid PDCCH is detected, the UE can assume the gNB to receive the BFRQ successfully.

FIG. 3 illustrates that, in some embodiments, a user equipment (UE) 10 and a base station 20 of a beam failure recovery for a secondary cell (SCell) according to an embodiment of the present disclosure are provided, wherein, however, the claimed invention requires further features not described below. The UE 10 includes a processor 11, a memory 12, and a transceiver 13. The base station includes aprocessor 21, a memory 22 and a transceiver 23. The processor 11 or 21 are configured to implement proposed functions, procedures and/or methods described in this description. Layers of radio interface protocol may be implemented in the processor 11 or 21. The memory 12 or 22 is operatively coupled with the processor 11 or 21 and stores a variety of information to operate the processor 11 or 21. The transceiver 13 or 23 is operatively coupled with the processor 11 or 21, and the transceiver 13 or 23 transmits and/or receives a radio signal.

The processor 11 or 21 may include an application-specific integrated circuit (ASIC), other chipsets, logic circuit and/or data processing devices. The memory 12 or 22 may include a read-only memory (ROM), a random access memory (RAM), a flash memory, a memory card, a storage medium and/or other storage devices. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21, in which those can be communicatively coupled to the processor 11 or 21 via various means are known in the art.

The communication between UEs relates to vehicle-to-everything (V2X) communication including vehicle-to-vehicle (V2V), vehicle-to-pedestrian (V2P), and vehicle-to-infrastructure/network (V2I/N) according to a sidelink technology developed under 3rd generation partnership project (3GPP) release 14, 15, 16, and beyond. UEs communicate with each other directly via a sidelink interface such as a PC5 interface.

The processor 11 is configured to be configured a plurality of SCells by the base station 20 and be configured to perform a beam failure recovery on a first SCell of the SCells by the base station 20.

The processor 11 is configured to be configured with a parameter that indicates the UE to perform the beam failure recovery for a bandwidth part (BWP) in the first SCell. In some embodiments, the processor 11 is configured to be configured with a new beam identification reference signal (NBI RS), which indicates the UE to perform the beam failure recovery for a BWP in the first SCell. In some embodiments, the processor 11 is configured to be requested to report an index of one NBI RS that is chosen by the processor 11 based on comparing a reference symbol received power (RSRP) threshold of the one NBI RS to a threshold.

In some embodiments, the processor 11 is configured to be configured with a beam failure detection reference signal (BFD RS), which indicates the UE to perform the beam failure recovery for a BWP in the first SCell. In some embodiments, the transceiver 13 is configured to transmit, to the base station 20, a beam failure recovery request (BFRQ) when the transceiver 13 is requested to use a granted physical uplink shared channel (PUSCH) transmission to report a beam failure on the first SCell. In some embodiments, the transceiver 13 is configured to receive a beam failure recovery response (BFRR) in response to the BFRQ from the base station 20.

The processor 21 is configured to configure, to the UE 10, a plurality of SCells and configure the UE 10 to perform a beam failure recovery on a first SCell of the SCells.

The processor 21 is configured to configure the UE 10 with a parameter that indicates the UE to perform the beam failure recovery for a bandwidth part (BWP) in the first SCell. In some embodiments, the processor 21 is configured to configuring the UE 10 with a new beam identification reference signal (NBI RS), which indicates the UE to perform the beam failure recovery for a BWP in the first SCell. In some embodiments, the processor 21 is configured to request the UE 10 to report an index of one NBI RS that is chosen by the UE 10 based on comparing a reference symbol received power (RSRP) threshold of the one NBI RS to a threshold. In some embodiments, the processor 21 is configured to configure the UE 10 with a beam failure detection reference signal (BFD RS), which indicates the UE to perform the beam failure recovery for a BWP in the first SCell. In some embodiments, the transceiver 23 receives a beam failure recovery request (BFRQ) from the UE 10 when the processor 21 requests the UE 10 to use a granted physical uplink shared channel (PUSCH) transmission to report a beam failure on the first SCell, and the transceiver 23 transmits, to the UE 10, a beam failure recovery response (BFRR) in response to the BFRQ.

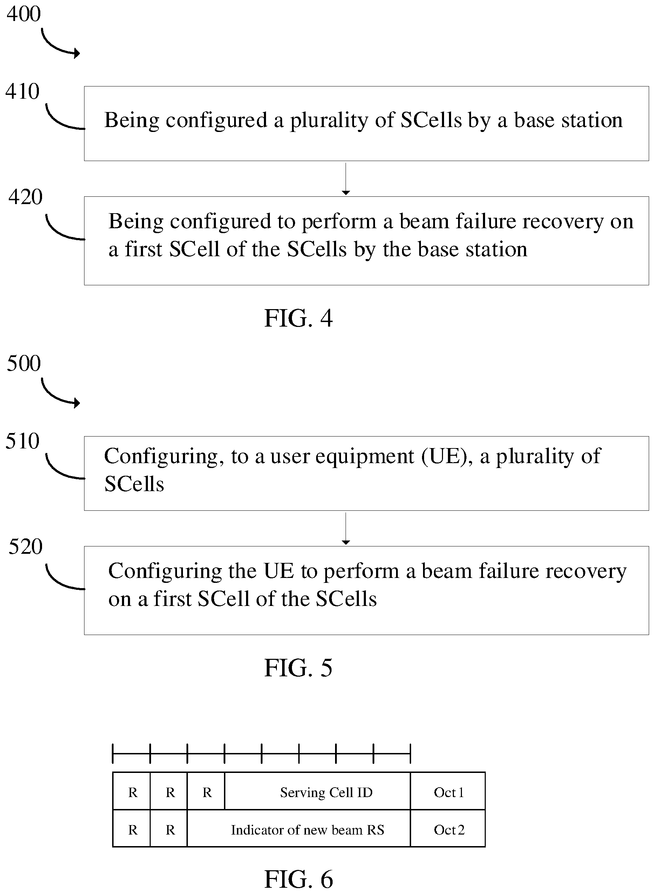

FIG. 4 illustrates a method 400 of a beam failure recovery for a secondary cell (SCell) for a UE according to an embodiment of the present disclosure, wherein the claimed invention requires further features not shown in FIG. 4. The method 400 includes: a block 410, being configured a plurality of SCells by a base station and a block 420, being configured to perform a beam failure recovery on a first SCell of the SCells by the base station.

The method further includes being configured with a parameter that indicates the UE to perform the beam failure recovery for a bandwidth part (BWP) in the first SCell. In some embodiments, the method further includes being configured with a new beam identification reference signal (NBI RS), which indicates the UE to perform the beam failure recovery for a BWP in the first SCell. In some embodiments, the method further includes being requested to report an index of one NBI RS that is chosen by the UE based on comparing a reference symbol received power (RSRP) threshold of the one NBI RS to a threshold. In some embodiments, the method further includes being configured with a beam failure detection reference signal (BFD RS), which indicates the UE to perform the beam failure recovery for a BWP in the first SCell. The method further includes transmitting, to the base station, a beam failure recovery request (BFRQ) when the UE is requested to use a granted physical uplink shared channel (PUSCH) transmission to report a beam failure on the first SCell. The method further includes receiving a beam failure recovery response (BFRR) in response to the BFRQ from the base station.

FIG. 5 illustrates a method 500 of a beam failure recovery for a secondary cell (SCell) for a base station according to an embodiment of the present disclosure, wherein the claimed invention requires further features not shown in FIG. 5. The method 500 includes: a block 510, configuring, to a user equipment (UE), a plurality of SCells and a block 520, configuring the UE to perform a beam failure recovery on a first SCell of the SCells.

The method further includes configuring the UE with a parameter that indicates the UE to perform the beam failure recovery for a bandwidth part (BWP) in the first SCell. In some embodiments, the method further includes configuring the UE with a new beam identification reference signal (NBI RS), which indicates the UE to perform the beam failure recovery for a BWP in the first SCell. In some embodiments, the method further includes requesting the UE to report an index of one NBI RS that is chosen by the UE based on comparing a reference symbol received power (RSRP) threshold of the one NBI RS to a threshold. In some embodiments, the method further includes configuring the UE with a beam failure detection reference signal (BFD RS), which indicates the UE to perform the beam failure recovery for a BWP in the first SCell. The method further includes receiving a beam failure recovery request (BFRQ) from the UE when the base station requests the UE to use a granted physical uplink shared channel (PUSCH) transmission to report a beam failure on the first SCell, and transmitting, to the UE, a beam failure recovery response (BFRR) in response to the BFRQ.

Methods of beam failure recovery (or called link recovery) for SCell are proposed. In some embodiment, a beam can correspond to an RS resource, which can be a CSI-RS resource, an SRS resource, a synchronization signal/physical broadcast channel (SS/PBCH) block, or any other type of RS.

In some embodiment, at an operation associated with a configuration to perform a SCell BFR, a UE can be configured multiple SCells (secondary cells), for example up to 31 SCells. However, the UE does not need to operate beam failure recovery (or called link recovery) on all configured SCells. The UE can report the maximal number of SCell(s) on which that UE is able to perform beam failure recovery, for example the number can be 1, 2, 4, 8, 16, 31.

In a NR system, there are various deployment scenarios, which can be a single NR system, a E-UTRA new radio-dual connectivity (EN-DC) (a master node is LTE) where a master cell group (MCG) uses an evolved universal terrestrial radio access (E-UTRA) and a secondary cell group (SCG) uses a NR radio access, a NR-E-UTRA dual connectivity(NE-DC) (a master node is NR) where a MCG uses NR radio access and SCG uses E-UTRA and NR-DC where both a MCG and SCG uses NR radio access.

In one embodiment, the UE can report the maximal number SCell(s) on which that is able to perform beam failure recovery as part of UE capability. There are multiple alternatives for the UE capability designs regarding the maximal number of SCells for beam failure recovery. In an alternative 1 (Alt 1), the UE can report a number N1 and N1 is the total number of SCells on which the UE is able to perform beam failure recovery including both MCG and SCG. In an Alt 2, the UE can report a number of N2 and N2 is the total number of SCells on which the UE is able to perform beam failure recovery among MCGs. The UE can also report a number of N3 and N3 is the total number of SCells on which the UE is able to perform beam failure recovery among SCGs. In one example, N2 and N3 can be reported by one parameter $N_{23}$ and the gNB can apply the reported $N_{23}$ to both MCG and SCG. In one example, reporting N3 can be optional. In an Alt. 3, the UE can report a number of N4 and N4 is the total number of SCells on which the UE is able to perform beam failure recovery among SCGs. That method can be applicable to an EN-DC scenario.

In another embodiment, the UE can report the total number of SCells and SpCells that the UE is able to perform beam failure recovery (i.e., link recovery). There are the following alternatives for the UE capability reporting for the embodiment. In an Alt 1, the UE can report a number of N5 and N5 is the total number Cells, including SCell and SpCell, on which the UE is able to perform beam failure recovery on both MCG and SCG. In an Alt 2, the UE can report a number of N6 and N6 is the total number of Cells, including SCell and SpCell, on which the UE is able to perform beam failure recovery on MCG. The UE can also report a number of N7 and N7 is the total number of Cells, including SCell and SpCell, on which the UE is able to perform beam failure recovery among SCGs. In one example, N7 can be reported by one parameter $N_{67}$ and the gNB can apply the reported $N_{67}$ to both MCG and SCG. In one example, reporting N7 can be optional. In an Alt.3, the UE can report a number of N8 and N8 is the total number of Cells, including SCell and SpCell, on which the UE is able to perform beam failure recovery among SCGs. That method can be applicable to an EN-DC scenario.

Since generally the UE is not able to perform beam failure recovery on all the configured SCells, there is a need to specify the methods to configure the UE with which SCell(s) the UE can perform beam failure recovery on. In one embodiment, the gNB can configure a UE to perform beam failure recovery on one or more SCell(s). For one SCell configured for beam failure recovery, the UE can be requested to measure a set of beam failure detection reference signals (RS) to detect the beam failure on that SCell. The UE can also measure a set of new beam identification RSs for that SCell to identify at least one new candidate beam RS. When the beam failure on that SCell is detected, the UE can be requested to report the event of beam failure and also the index of that SCell to the gNB. The UE can also report the index of one identified new beam RS to the gNB.

There are multiple alternatives to configure the beam failure recovery (i.e., link recovery) for one SCell to a UE. In a first method, the gNB can use higher layer signaling, for example a radio resource control (RRC, required by the claimed invention) or for example a medium access control control element (MAC CE, not according to the claimed invention) to explicitly configure the UE to perform beam failure recovery on BWP in a first SCell. The UE can be configured with a parameter that indicates the UE to perform the beam failure recovery for a BWP in a first SCell. The UE can be configured with the following RRC parameter as a table 1.

Table 1

| BWP-DownlinkDedicated ::= | SEQUENCE { |
| --- | --- |
| pdcch-Config<br>OPTIONAL,    -- Need M | SetupRelease  {  PDCCH-Config  } |
| pdsch-Config<br>OPTIONAL,    -- Need M | SetupRelease  {  PDSCH-Config  } |
| sps-Config<br>OPTIONAL,    -- Need M | SetupRelease  {  SPS-Config  } |
| radioLinkMonitoringConfig<br>OPTIONAL,    -- Need M | SetupRelease  {  RadioLinkMonitoringConfig  } |
| beamFailureRecoveryEnable<br>example 1 or 0). It can be present or absent. | Note: its value can be enabled or disabled (for |

| |
| --- |
| ...<br><br>} |

In this example, a higher layer parameter beamFailureRecoveryEnable can be configured to one BWP of a first SCell to the UE. And the value of beamFailureRecoveryEnable can indicate the UE of whether the UE can perform beam failure recovery on the BWP of a first SCell. The parameter of beamFailureRecoveryEnable can have two values, enable and disable. If the value of beamFailureRecoveryEnable parameter configured for a BWP of a first SCell is enable, the UE can be requested to perform beam failure recovery on the given BWP of a first SCell. The parameter of beam-FailureRecoveryEnable can be present or absent. If the parameter of beamFailureRecoveryEnable configured for a BWP of a first SCell is present, the UE can be requested to perform beam failure recovery on the given BWP of a first SCell.

In one method, if the gNB configure the UE to perform beam failure recovery on a BWP of a first SCell, the UE can obtain the beam failure detection RS for that BWP of a first SCell as the following method: If the parameter beam-FailureRecoveryEnable configured for a given BWP in a secondary cell to a UE indicates that the UE can perform link recovery on the given BWP of that secondary cell, the UE can be provided with a set $\overline{q_0}$ of CSI-RS resource configuration indexes by higher layer signalling parameter to detect the beam failure on the given BWP of that secondary cell. If the parameter beamFailureRecoveryEnable configured for a given BWP in a secondary cell to a UE indicates that the UE can perform link recovery on the given BWP of that secondary cell but the UE is not provided with a set $\overline{q_0}$ of CSI-RS resource configuration indexes by higher layer signalling parameter to detect the beam failure on the given BWP of that secondary cell, the UE determines the set $\overline{q_0}$ to include periodic CSI-RS resource configuration indexes with same values as the RS indexes in the RS sets indicated by TCI-state for respective CORESETs that the UE uses for monitoring PDCCH in that BWP of that secondary cell and, if there are two RS indexes in a TCI state, the set $\overline{q_0}$ includes RS indexes with QCL-TypeD configuration for the corresponding TCI states. The UE expects the set $\overline{q_0}$ to include up to two RS indexes. The UE expects single port RS in the set $\overline{q_0}$.

In another example, the gNB can configure a list of BWPs of SCells though higher layer signaling (for example RRC or MAC CE) to the UE for the UE to perform beam failure recovery on those BWPs of SCells. If the UE is configured to perform link recovery on a given BWP in a secondary cell, the UE can be provided with a set $\overline{q_0}$ of CSI-RS resource configuration indexes by higher layer signalling parameter to detect the beam failure on the given BWP of that secondary cell. If the UE is configured to perform link recovery for a given BWP for a secondary cell to but the UE is not provided with a set $\overline{q_0}$ of CSI-RS resource configuration indexes by higher layer signalling parameter to detect the beam failure on the given BWP of that secondary cell, the UE determines the set $\overline{q_0}$ to include periodic CSI-RS resource configuration indexes with same values as the RS indexes in the RS sets indicated by TCI-state for respective CORESETs that the UE uses for monitoring PDCCH in that BWP of that secondary cell and, if there are two RS indexes in a TCI state, the set $\overline{q_0}$ includes RS indexes with QCL-Type D configuration for the corresponding TCI states. The UE expects the set $\overline{q_0}$ to include up to two RS indexes. The UE expects single port RS in the set $\overline{q_0}$.

In some embodiments, in a second method, the gNB can configure a UE to perform beam failure recovery on a first SCell implicitly by configuring a set of new beam identification RS(s) for a first SCell to the UE. If the UE is configured with a set of CSI-RS resources and/or SS/PBCH blocks as new beam identification RS for a BWP in a first SCell by the gNB, the UE can be requested to perform beam failure recovery on the BWP in a first SCell. If the UE is configured with a set of CSI-RS resources and/or SS/PBCH blocks as new beam identification RS for a BWP in a first SCell by the gNB, the UE can obtain the set of beam failure detection RS for the given BWP in a first SCell according to one of the following methods. The UE can be configured with a set of CSI-RS resources as the beam failure detection RS for the given BWP of a first SCell by the gNB. If the UE is not provided with a set of CSI-RS resources as the beam failure detection RS for the given BWP of a first SCell by the gNB, the UE can determine the set of beam failure detection RS for the given BWP of a first SCell by using the CSI-RS resource(s) configured as the QCL-Type D configuration in the TCI-state configured in CORESETs that the UE uses for monitoring PDCCH in the given BWP of that SCell.

In one example, the UE can be configured with a set $\overline{q_1}$ of periodic CSI-RS resource configuration indexes and/or SS/PBCH block indexes by high layer parameter scellcandidateBeamRSList for radio link quality measurements on the serving cell. In one alternative, the UE can be configured with the high layer parameter scellcandidateBeamRSList for a given DL BWP of a first SCell. In another alternative, the UE can be configured with the high layer parameter scellcandidateBeamRSList for a first SCell and the UE can apply that parameter to any DL BWP of a first SCell. In the parameter scellcandidateBeamRSList, the UE can be configured with a list of periodic CSI-RS resource configuration indexes and/or SS/PBCH block indexes.

In one example, if a UE is provided with a set $\overline{q_1}$ of periodic CSI-RS resource configuration indexes and/or SS/PBCH block indexes by high layer parameter scellcandidateBeamRSList for radio link quality measurements for a DL BWP in a first SCell, the UE can be requested to perform link recovery on the given DL BWP in a first SCell. If the UE is provided with a set $\overline{q_1}$ of periodic CSI-RS resource configuration indexes and/or SS/PBCH block indexes by high layer parameter scellcandidateBeamRSList for radio link quality measurements for a given DL BWP in a first SCell, the UE can be provided with a set $\overline{q_0}$ of CSI-RS resource configuration indexes by higher layer signalling parameter to detect the beam failure on the given BWP of that secondary cell. If the UE is provided with a set $\overline{q_1}$ of periodic CSI-RS resource configuration indexes and/or SS/PBCH block indexes by high layer parameter scellcandidateBeamRSList for radio link quality measurements for a given DL BWP in a first SCell but the UE is not provided with a set $\overline{q_0}$ of CSI-RS resource configuration indexes by higher layer signalling parameter to detect the beam failure on the given BWP of that secondary cell, the UE determines the set $\overline{q_0}$ to include periodic CSI-RS resource configuration indexes with same values as the RS indexes in the RS sets indicated by TCI-state for respective CORESETs that the UE uses for monitoring PDCCH in that BWP of that secondary cell and, if there are two RS indexes in a TCI state, the set $\overline{q_0}$ includes RS indexes with QCL-Type D configuration for the corresponding TCI states. The UE expects the set $\overline{q_0}$ to include up to two RS indexes. The UE expects single port RS in the set $\overline{q_0}$.

In some embodiments, in a third method, the gNB can configure a UE to perform beam failure recovery on a first SCell implicitly through one or more of the followings: configuring a set of RSs for beam failure detection for a BWP of a first SCell to the UE, or configuring a set of RSs for new beam identification for a BWP of a first SCell to the UE. If the UE is configured with a set of CSI-RS resources as beam failure detection RS for a BWP in a first SCell or if the UE is configured with a set of CSI-RS resources and/or SS/PBCH blocks as new beam identification RS for a BWP in a first SCell by the gNB, the UE can be requested to perform beam failure recovery on the BWP in a first SCell.

If the UE is configured with a set of CSI-RS resources as beam failure detection RS for a BWP in a first SCell, the UE can be requested to perform link recovery on the given BWP in a first SCell no matter whether the UE is configured with a set of CSI-RS resources and/or SS/PBCH blocks as new beam identification RS for a BWP in a first SCell by the gNB. If the UE is configured with a set of CSI-RS resources and/or SS/PBCH blocks as new beam identification RS for a BWP in a first SCell by the gNB, the UE can be requested to perform link recovery on the given BWP in a first SCell. In this case, if the UE is not configured with a set of CSI-RS resources as beam failure detection RS for a BWP in a first SCell, the UE can determine the set of beam failure detection RS for the given BWP of a first SCell by using the CSI-RS resource(s) configured as the QCL-Type D configuration in the TCI-state configured in the CORESETs that the UE uses for monitoring PDCCH in the given BWP of that SCell.

In one example, if a UE is provided with a set $\overline{q_0}$ of CSI-RS resource configuration indexes by higher layer signalling parameter to detect the beam failure on the given BWP in a first SCell or if a UE is provided with a set $\overline{q_1}$ of periodic CSI-RS resource configuration indexes and/or SS/PBCH block indexes by high layer parameter scellcandidate-BeamRSList for radio link quality measurements for a DL BWP in a first SCell, the UE can be requested to perform link recovery on the given DL BWP in a first SCell. If the UE is provided with a set $\overline{q_1}$ of periodic CSI-RS resource configuration indexes and/or SS/PBCH block indexes by high layer parameter scellcandidateBeamRSList for radio link quality measurements for a given DL BWP in a first SCell, the UE can be provided with a set $\overline{q_0}$ of CSI-RS resource configuration indexes by higher layer signalling parameter to detect the beam failure on the given BWP of that secondary cell. If the UE is provided with a set $\overline{q_1}$ of periodic CSI-RS resource configuration indexes and/or SS/PBCH block indexes by high layer parameter scellcandidateBeamRSList for radio link quality measurements for a given DL BWP in a first SCell but the UE is not provided with a set $\overline{q_0}$ of CSI-RS resource configuration indexes by higher layer signalling parameter to detect the beam failure on the given BWP of that secondary cell, the UE determines the set $\overline{q_0}$ to include periodic CSI-RS resource configuration indexes with same values as the RS indexes in the RS sets indicated by TCI-state for respective coresets that the UE uses for monitoring PDCCH in that BWP of that secondary cell and, if there are two RS indexes in a TCI state, the set $\overline{q_0}$ includes RS indexes with QCL-Type D configuration for the corresponding TCI states. The UE expects the set $\overline{q_0}$ to include up to two RS indexes. The UE expects single port RS in the set $\overline{q_0}$.

In one embodiment not according to the claimed invention, a UE can be configured or indicated to not perform beam failure recovery on a SCell. The gNB can configure the UE to do that implicitly or explicitly. The UE can assume not to perform link recovery for a given BWP in a first SCell according to one or more of the following methods. In a method, if there is no CORESETs (except CORESET-BFR) configured for the UE to monitor PDCCH in a given BWP in a first SCell, the UE can assume not to perform link recovery for the given BWP in a first SCell. In a method, if there is no search space (except search space provided by recoverySearchSpaceId) configured for the UE to monitor PDCCH in a given BWP in a first SCell, the UE can assume not to perform link recovery for the given BWP in a first SCell. In a method, if the UE is configured with CORESET and search space for the UE to monitor PDCCH in a given BWP in a first SCell but the monitoring PDCCH is not activated, the UE can assume not to perform link recovery for the given BWP in a first SCell.

Please note, the UE can be configured with CORESET. CORESET-BFR that is dedicated for beam failure recovery. The beam failure detection does not include UE monitoring CORESET-BFR and the search space provided by recoverySearchSpaceId that is associated with CORESET-BFR.

In one method, a UE does expect that the number of SCells configured by the serving gNB for SCell link recovery is larger than the UE capability report, $N_C$. If the number of SCells configured by the serving gNB for SCell link recovery to a UE is larger than the UE capability report $N_C$, the UE can be requested to perform one or more of the followings. IN some embodiments, in an Alt 1, the UE can pick a subset of configured SCell to perform link recovery, in which the number of SCells is not larger than UE capability report $N_C$. In an Alt 2, the UE can pick up to $N_C$ SCells with lowest cell index among the configured SCells for SCell link recovery. In an Alt 3, the UE can pick up to $N_C$ SCells with highest cell index among the configured SCells for SCell link recovery. In an Alt 4, the UE can be requested to first pick SCells from the SCells configured for SCell link recovery in MCG and then the UE can pick SCells among SCells configured from SCell link recovery in SCG.

At an operation associated with configuring and reporting new beam RS. In 3GPP release specification, the new beam identification RS (i.e., the set of $\overline{q_1}$ of periodic CSI-RS resources) is configured as part of the configuration for a given UL BWP. That works because the beam failure recovery function specified here is for a primary cell and the primary cell has both DL and UL BWP. In release 15 link recovery function, uplink contention-free RACH channel in UL BWP is used by the UE to transmit beam failure recovery request message. But that method does not work for SCell beam failure recovery (i.e., link recovery for one SCell) because the SCell deployment could have various cases of a SCell with both DL and UL and a SCell with DL only.

To support beam failure recovery for a given SCell, an embodiment can configure the set of new beam identification RS as part of a configuration of DL BWP of that SCell or as part of configuration of that SCell. In one embodiment, for a given SCell, a UE can be configured with a set of new beam identification RS for beam failure recovery of that SCell by one or more of the followings. In the configuration of a DL BWP of that SCell, the UE can be configured with a set of CSI-RS resources and/or SS/PBCH blocks as the new beam identification RS and also a threshold of L1-RSRP for identifying a new beam. In the configuration of in a given SCell, the UE can be configured with a set of CSI-RS resources and/or SS/PBCH blocks as the new beam identification for the beam failure recovery of any DL BWP in that SCell and also threshold of L1-RSRP for identifying a new beam.

In one method, a UE can be configured with the following higher layer parameter for a DL BWP in a SCell as illustrated in a table 2.

Table 2

```
      BWP-DownlinkDedicated ::=              SEQUENCE {

          pdcch-Config                             SetupRelease { PDCCH-Config }
OPTIONAL,      -- Need M

          pdsch-Config                             SetupRelease { PDSCH-Config }
OPTIONAL,      -- Need M

          sps-Config                               SetupRelease { SPS-Config }
OPTIONAL,      -- Need M

          radioLinkMonitoringConfig                SetupRelease { RadioLinkMonitoringConfig }
OPTIONAL,      -- Need M

          rsrp-ThresholdSSB                        RSRP-Range

          scellcandidateBeamRSList                 SEQUENCE
(SIZE(1..maxNrofscellCandidateBeams)) OF SCELL-ResourceNewBeam

      ...

      }

      SCELL-ResourceNewBeam ::=        SEQUENCE {

      servingCellId                        ServCellIndex
OPTIONAL,      -- Need S
```

```
      referenceSignal                      CHOICE {

          ssb-Index                                SSB-Index,

          csi-RS-Index                             NZP-CSI-RS-ResourceId,

          }

}
```

In one method, a UE can be configured with the following higher layer parameter in the configuration of a SCell as illustrated in a table 3.

Table 3

| ServingCellConfig ::= SEQUENCE { |
| --- |
| tdd-UL-DL-ConfigurationDedicated TDD-UL-DL-ConfigDedicated OPTIONAL, -- Cond TDD |
| initialDownlinkBWP BWP-DownlinkDedicated OPTIONAL, -- Need M |
| downlinkBWP-ToReleaseList SEQUENCE (SIZE (1..maxNrofBWPs)) OF BWP-Id OPTIONAL, -- Need N |
| downlinkBWP-ToAddModList SEQUENCE (SIZE (1..maxNrofBWPs)) OF BWP-Downlink OPTIONAL, -- Need N |
| firstActiveDownlinkBWP-Id BWP-Id OPTIONAL, -- Cond SyncAndCellAdd |
| bwp-InactivityTimer ENUMERATED {ms2, ms3, ms4, ms5, ms6, ms8, ms10, ms20, ms30, |
| ms40,ms50, ms60, ms80,ms100, ms200,ms300, ms500, |
| ms750, ms1280, ms1920, ms2560, spare10, spare9, spare8, |
| spare7, spare6, spare5, spare4, |

```
spare3, spare2, spare1 }        OPTIONAL,      --Need R


        defaultDownlinkBWP-Id                   BWP-Id
OPTIONAL,      -- Need S




        rsrp-ThresholdSSB                       RSRP-Range

        scellcandidateBeamRSList                SEQUENCE
(SIZE(1..maxNrofscellCandidateBeams)) OF SCELL-ResourceNewBeam




        uplinkConfig                            UplinkConfig
OPTIONAL,      -- Need M


        supplementaryUplink                     UplinkConfig
OPTIONAL,      -- Need M


        pdcch-ServingCellConfig                 SetupRelease { PDCCH-ServingCellConfig }
OPTIONAL,      -- Need M


        pdsch-ServingCellConfig                 SetupRelease { PDSCH-ServingCellConfig }
OPTIONAL,      -- Need M


        csi-MeasConfig                          SetupRelease { CSI-MeasConfig }
OPTIONAL,      -- Need M


        sCellDeactivationTimer                  ENUMERATED {ms20, ms40, ms80, ms160,
ms200, ms240,


                                                     ms320, ms400, ms480, ms520,
ms640, ms720,


                                                     ms840, ms1280, spare2,spare1}
OPTIONAL,      -- Cond ServingCellWithoutPUCCH


        crossCarrierSchedulingConfig            CrossCarrierSchedulingConfig
OPTIONAL,      -- Need M
```

```
        tag-Id                          TAG-Id,

        dummy                                   ENUMERATED {enabled}
OPTIONAL,      -- Need R

        pathlossReferenceLinking        ENUMERATED {pCell, sCell}
OPTIONAL,      -- Cond SCellOnly

        servingCellMO                           MeasObjectId
OPTIONAL,      -- Cond MeasObject

        ...,

        [[

        lte-CRS-ToMatchAround                   SetupRelease { RateMatchPatternLTE-CRS }
OPTIONAL,      -- Need M

        rateMatchPatternToAddModList            SEQUENCE (SIZE
(1..maxNrofRateMatchPatterns)) OF RateMatchPattern         OPTIONAL,      -- Need N

        rateMatchPatternToReleaseList           SEQUENCE (SIZE (1..maxNrofRateMatchPatterns))
OF RateMatchPatternId          OPTIONAL,      -- Need N

        downlinkChannelBW-PerSCS-List           SEQUENCE (SIZE (1..maxSCSs)) OF
SCS-SpecificCarrier                     OPTIONAL      -- Need S

        ]]

    }

    SCELL-ResourceNewBeam ::=        SEQUENCE {

    servingCellId                   ServCellIndex
OPTIONAL,      -- Need S

    referenceSignal                         CHOICE {

        ssb-Index                               SSB-Index,

        csi-RS-Index                            NZP-CSI-RS-ResourceId,
```

```
            }

    }
```

In one method, the UE can be requested to report index of one new beam identification RS that is chosen by the UE based on comparing the L1-RSRP to a threshold. In one example, the UE can report a new beam indicator, where new beam indicator k corresponds to the configured (k+1)-th entry in the configured set of new beam identification RS for that SCell. In one example, the UE can report a new beam indicator, where new beam indicator k corresponds to the configured k-th entry in the configured set of new beam identification RS for that SCell and the UE can also report k = 0 to indicate that there is no RS in the set of new beam identification RS has L1-RSRP $\geq$ a configured threshold.

At an operation associated with SCell BFRQ. In some embodiments, a UE can be configured to use a dedicated PUCCH resource to send scheduling request message to request uplink resource from the serving gNB for PUSCH transmission to carry the higher layer signaling that reports the information of failed SCells. Generally, the UE is also configured with PUCCH resource(s) for normal scheduling request transmission. Therefore, if the UE is scheduled with a PUSCH transmission at one slot before the next available PUCCH resources for dedicated SCell beam failure recovery scheduling request or at one slot before a time point that is equal to the time of next available PUCCH resource for dedicated SCell plus some preconfigured time offset, the UE can be requested to not send positive scheduling request in the PUCCH resources dedicated for SCell beam failure recovery.

According to the invention, a UE is configured by higher layer parameter, for example SCellBFRSchedulingRequestResourceConfig, a set of configurations for scheduling request in a PUCCH transmission using PUCCH format 0 or PUCCH format 1. In a PUCCH resource configured by SCellBFRSchedulingRequestResourceConfig, the UE can be requested to send schedule request to ask for scheduling PUSCH transmission carrying at least one MAC CE message that reports at least one index of failed SCell. When the UE declares beam failure on one SCell at slot n and the next available PUCCH resources configured by SCellBFRSchedulingRequestResourceConfig is at slot m, if the UE is scheduled with a PUSCH transmission no later than slot $m + N_{SCell}$ (where parameter $N_{SCell}$ can be preconfigured or configured), the UE cannot report positive scheduling request in the PUCCH resources configured by SCellBFRSchedulingRequestResourceConfig is at slot $m$. The UE can be requested to use that granted PUSCH to carry the higher layer signaling to report the index of failed SCell. The technical reason for that is: if PUSCH transmission can be scheduled by the gNB based on other information, for example normal SR. If there is one PUSCH transmission that is earlier than that can be triggered by dedicated SCell BFR SR, the UE can use that PUSCH transmission to report SCell BFR for low latency, instead of waiting for dedicated PUCCH resources. In one embodiment, the UE can use one MAC CE message to report index(es) of failed SCell(s) and/or indicator(s) of CSI-RS resource(s) and/or SS/PBCH block(s) configured in the set of new beam identification RS for SCell link recovery.

FIG. 6 illustrates reporting information for a beam failure recovery for a secondary cell (SCell) according to an embodiment of the present disclosure (the reporting information as isolated feature is not covered by the claimed invention). In some embodiments, in a first method, a MAC CE reporting information for SCell link recovery can be designed as illustrated in FIG. 6. The 'serving Cell ID' indicates the index of one SCell that beam failure is detected. 'Indicator of new beam RS' indicates one CSI-RS resource or SS/PBCH block among the set of CSI-RS resources and/or SS/PBCH blocks configured to the SCell indicated by the field 'serving Cell ID' in the same MAC CE message as the set of new beam identification RS. In one example, the value of 'indicator of new beam RS' being k($\geq$ 0) indicates the (k+1)-th entry of CSI-RS resource or SS/PBCH block configured in the set of new beam identification RS for the SCell identified by the value of 'serving Cell ID' in the same MAC CE. This type of MAC CE message can be used by a UE to report the link recovery request for a failed SCell that is configured with a set of CSI-RS resources and/or SS/PBCH blocks for new beam identification.

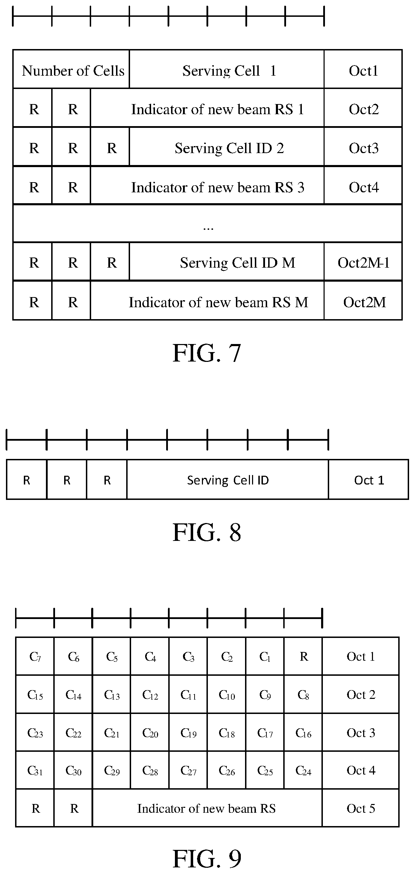

FIG. 7 illustrates reporting information for a beam failure recovery for a secondary cell (SCell) according to an embodiment of the present disclosure (the reporting information as isolated feature is not covered by the claimed invention). In one example, a MAC CE reporting information for SCell link recovery can be designed as illustrated in FIG. 7. The 'Number of Cells' indicates the number of SCells that are reported in the MAC CE for SCell beam failure. The value of 'Number of Cells' is equal to M ($\geq$ 1). The 'serving Cell ID m' indicates the index of one SCell that beam failure is detected. 'Indicator of new beam RS m' indicates one CSI-RS resource or SS/PBCH block among the set of CSI-RS resources and/or SS/PBCH blocks configured to the SCell indicated by the field 'serving Cell ID m' in the same MAC CE message as the set of new beam identification RS. In one example, the value of 'indicator of new beam RS m' being k($\geq$0) indicates the (k+1)-th entry of CSI-RS resource or SS/PBCH block configured in the set of new beam identification RS for the SCell identified by the value of 'serving Cell ID m' in the same MAC CE. This type of MAC CE message can be used by a UE to report the link recovery request for one or more failed SCell that is configured with a set of CSI-RS resources and/or SS/PBCH blocks for new beam identification for each reported SCell.

FIG. 8 illustrates reporting information for a beam failure recovery for a secondary cell (SCell) according to an embodiment of the present disclosure (the reporting information as isolated feature is not covered by the claimed invention). In some embodiments, in a second method, a MAC CE reporting information for SCell link recovery can be designed as illustrated in FIG. 8. The 'serving Cell ID' indicates the index of one SCell that beam failure is detected. FIG. 9 illustrates reporting information for a beam failure recovery for a secondary cell (SCell) according to an embodiment of the present disclosure. In some embodiments, in one method, a MAC CE reporting information for SCell link recovery can be designed as illustrated in FIG. 9 (the reporting information as isolated feature is not covered by the claimed invention). Each bit $C_i$ indicates the beam failure status of SCell with SCellIndex i. The value of $C_i$ can indicate whether the SCell with SCellIndex i has beam failure or not. The $C_i$ field is set to 1 to indicate that SCell with SCellIndex i has beam failure. 'Indicator of new beam RS' indicates one CSI-RS resource or SS/PBCH block among the set of CSI-RS resources and/or SS/PBCH blocks configured to the SCell indicated $C_i$ set to be 1 in the same MAC CE message as the set of new beam identification RS. In one example, the value of 'indicator of new beam RS' being $k (\geq 0)$ indicates the (k+1)-th entry of CSI-RS resource or SS/PBCH block configured in the set of new beam identification RS for the SCell identified $C_i$ set to be 1. In one MAC CE message, the UE can expect that only one $C_i$ to be set to be 1. In one MAC CE message, if more than one $C_i$ are set to be 1, the SCells corresponding to those $C_i$ being set to be 1 can be configured with the same set of CSI-RS resources and/or PBCH blocks as new beam identification RS.

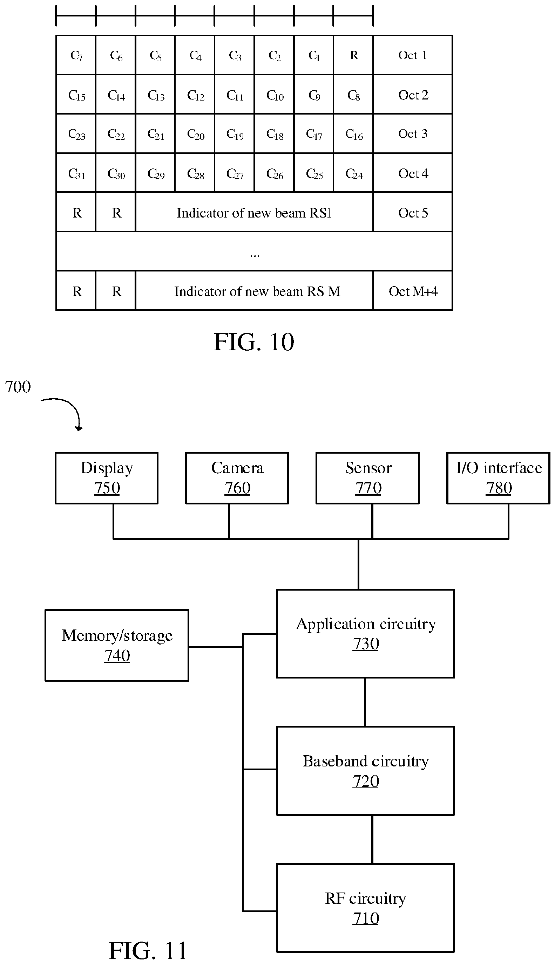

FIG. 10 illustrates reporting information for a beam failure recovery for a secondary cell (SCell) according to an embodiment of the present disclosure (the reporting information as isolated feature is not covered by the claimed invention). In some embodiments, in one method, a MAC CE reporting information for SCell link recovery can be designed as illustrated in FIG. 10. Each bit $C_i$ indicates the beam failure status of SCell with SCellIndex i. The value of $C_i$ can indicate whether the SCell with SCellIndex i has beam failure or not. The $C_i$ field is set to 1 to indicate that SCell with SCellIndex i has beam failure. In one MAC CE, the UE can set one or more of $C_i$ to be 1 to indicate the corresponding SCell has beam failure. The field 'Indicator of new beam RS 1' to 'Indicator of new beam RS M' provides one CSI-RS resource or SS/PBCH block among the set of CSI-RS resources and/or SS/PBCH blocks configured to the SCell indicated $C_i$ set to be 1 in the same MAC CE message as the set of new beam identification RS. The number of M can be varied and depends on the number of $C_i$ set to be 1. M can be equal to the number of $C_i$ set to be 1 in the same MAC CE message. The field 'Indicator of new beam RS m' (m = 1, 2, ..., M) provides one CSI-RS resource or SS/PBCH block among the set of CSI-RS resources and/or SS/PBCH blocks configured to the SCell that is m-th $C_i$ among all the $C_i$s set to be 1 in the same MAC CE message.

In one embodiment, a UE can be configured with dedicated index for each SCell that the UE is configured to perform beam failure recovery. When the UE report beam failure of that SCell, the UE can report the configured index, instead of reporting the index of that Cell that is provided by higher layer parameter sCellIndex. That method can reduce the payload size for reporting the information of SCell because the number of SCells that the UE is able to perform beam failure recovery is generally less than the total number of SCells that is configured to the UE. The dedicated index for one SCell used to identify SCell beam failure can be configured according to one or more of the followings. For each SCell on which the UE is configured to perform beam failure recovery, the gNB can configure a dedicated index to identify the beam failure of that SCell. The gNB can use a higher layer parameter to configure it. For the SCell(s) on which the UE is configured to perform beam failure recovery, the UE can be requested to derive a dedicated index to identify the beam failure of each of those SCell based on some preconfigured/predefined rule. In one example, a UE is configured to perform beam failure recovery on SCells with SCell identities {SCellIndex1, SCellIndex2, SCellIndex3,....} and the UE can derive the dedicated index for SCell beam failure as follows: the index = 0 for the SCell with lowest SCellIndex among those configured SCells, the index = 1 for the SCell with second lowest SCellIndex among those configured SCells and so on so forth. In one example, a UE is configured to perform beam failure recovery on SCells with SCell identities {SCellIndex1, SCellIndex2, SCellIndex3,....} and the UE can derive the dedicated index for SCell beam failure as follows: the index = 0 for the SCell with largest SCellIndex among those configured SCells, the index = 1 for the SCell with second largest SCellIndex among those configured SCells and so on so forth. In one example, a UE is configured to perform beam failure recovery on one or more SCells and the UE is provided with a list of SCell identities SetSCellBFR = {SCellIndex1, SCellIndex2, SCellIndex3,....}, on which the UE is configured to perform beam failure recovery. Then the UE can report $k (\geq 0)$ as index of SCell beam failure to indicate that the SCell with SCell ID being equal to the (k+1)-th entry in the set SetSCellBFR has beam failure.

At an operation associated with gNB response for SCell BFRQ and UE behavior. After the UE reports index(es) of failed SCell(s) in one MAC CE message, the UE can expect that the serving gNB would respond to the reporting of the UE within some time duration. If the UE does not receive gNB response within the time duration, the UE can re-send the MAC CE message containing the index(es) of failed SCell(s). In one embodiment, after a UE reports at least one index of failed SCell to the gNB through a higher layer signaling, for example a first MAC CE, the UE can be requested to consider the one or more of the following as gNB's response to UE's reporting of failed SCell. In an Alt 1, a PDCCH scheduling PUSCH transmission that has same value of 'HARQ process number' but with different value of 'New beam indicator' as in the PDCCH that schedules the PUSCH transmission carrying that higher layer message, a first MAC CE, reporting index of failed SCell. In an Alt 2, the UE receives higher layer signaling, for example MAC CE activation command for one of the provided TCI states for a CORESET configured in the reported failed SCell. In an Alt 3, the UE receives higher layer signaling, for example MAC CE activation command for one of the provided TCI states for all the CORESETs configured in the reported failed SCell, which are included in the beam failure detection by the UE. In an Alt 4, the gNB triggers or configures a beam reporting in the reported failed SCell. If the UE receives trigger or configuration of L1-RSRP or L1-SINR reporting on the reported failed SCell from the gNB, the UE can assume that is a gNB's response to the beam failure reporting for that SCell. In an Alt 5, the UE is configured by the gNB with cross-scheduling to use PDCCH in another cell to cross-schedule the PDSCH and/or PUSCH transmission in the reported failed SCell. The gNB can use reconfiguration of higher layer parameter CrossCarrierSchedulingConfig to configure such a cross-carrier scheduling for that UE on the reported failed SCell. In an Alt 6, the UE receives a SCell activation/deactivation MAC CE from the serving gNB, which deactivates the SCell(s) that is identified by the index(es) of failed SCell reported in a first MAC CE. In an Alt 7, the UE can monitor the search space configured for link recovery for primary cell. After the UE sends the SR in PUCCH dedicated configured for SCell link recovery, the UE can start monitoring PDCCH in the search space configured for link recovery. The UE can assume the DM-RS antenna ports of to be QCLed with QCL assumption or TCI state configured for CORSET#0 to detect PDCCH in the search space configured for link recovery. After the UE sends MAC CE message carrying the index of failed SCell, the UE can start monitoring PDCCH in the search space configured for link recovery. The UE can assume the DM-RS antenna ports to be QCLed with QCL assumption or TCI state configured for CORSET#0 to detect PDCCH in the search space configured for link recovery if that MAC CE does not carry indicator for a new identified beam. If the MAC CE carries indicator for a new identified beam, the UE can assume the DM-RS antenna ports to be QCLed with the CSI-RS resource or SS/PBCK block indicated by the new beam indicator reported in that MAC-CE.

In some embodiments, in one method, the gNB response can be indicated by the 'new beam indicator' bit field in PDCCH that schedules PUSCH transmission to a UE. After the UE sent the MAC CE message for SCell beam failure recovery in one PUSCH, the UE can assume the gNB receives that MAC CE message successfully if the UE receives one UL schedule PDCCH with the same HARQ process number and with 'new beam indicator' being toggled within a configured time window. If the UE does not receive one UL scheduling PDCCH with the same HARQ process number and with 'new beam indicator' being toggled within the configured time window, the UE can re-transmit that MAC CE message containing the index(es) of failed SCell(s).

In one example, a UE can be configured with time window threshold for gNB response for beam failure recovery request for SCell, for example $N_4$ slots. When the UE sends a first PUSCH carrying MAC CE message to report at least index of failed SCell in slot n, the UE can expect to receive a DCI format 0_0 or DCI format 0_1 in PDCCH, which carries the same value in 'HARQ process number' but different value in 'New beam indicator' as in the DCI format that scheduled the transmission for a first PUSCH no later than $n + N_4 \times N_{slot}^{subframe,\mu}$ (another example $n + N_4 \times N_{slot}^{subframe,\mu} + 1$). When the UE sends a first PUSCH carrying MAC CE message to report at least index of one failed SCell in slot n, if the UE does not receive a DCI format 0_0 or DCI format 0_1 in PDCCH, which carries the same value in 'HARQ process number' but different value in 'New beam indicator' as in the DCI format that scheduled the transmission for a first PUSCH no later than $n + N_4 \times N_{slot}^{subframe,\mu}$ (another example $n + N_4 \times N_{slot}^{subframe,\mu} + 1$), the UE can re-send the MAC CE to report at least one index of failed SCell.

In another example, a UE can be configured with time window threshold for gNB response for beam failure recovery request for SCell, for example $N_4$ slots. When the UE sends a first PUSCH carrying MAC CE message to report at least index of failed SCell in slot n, the UE can expect to receive a DCI format 0_0 or DCI format 0_1 in PDCCH, which carries the same value in 'HARQ process number' but different value in 'New beam indicator' as in the DCI format that scheduled the transmission for a first PUSCH or receive a MAC CE activation command for one of the provided TCI states for a CORESET configured in one SCell that is reported in MAC CE message reporting index(es) of failed SCell or receive a MAC CE message that deactivates a SCell that is reported in the MAC CE message reporting index(es) of failed SCell no later than $n + N_4 \times N_{slot}^{subframe,\mu}$ (another example $n + N_4 \times N_{slot}^{subframe,\mu} + 1$). When the UE sends a first PUSCH carrying MAC CE message to report at least one index of failed SCell in slot n, if the UE does not receive a DCI format 0_0 or DCI format 0_1 in PDCCH, which carries the same value in 'HARQ process number' but different value in 'New beam indicator' as in the DCI format that scheduled the transmission for a first PUSCH, or does not receive a MAC CE activation command for one of the provided TCI states for a CORESET configured in one SCell that is reported in MAC CE message reporting index(es) of failed SCell or does not receive a MAC CE message that deactivates a SCell that is reported in the MAC CE message reporting index(es) of failed SCell no later than

$$n + N_4 \times N_{slot}^{subframe,\mu}$$ (another example $$n + N_4 \times N_{slot}^{subframe,\mu} + 1$$) , the UE can re-send the MAC CE to report at least one index of failed SCell.

In summary, in some embodiments of the present disclosure, the methods of beam failure recovery (link recovery) for SCell are provided. The following methods are proposed. The methods for how to configure a UE to perform link recovery on one or multiple given SCells, which are (1) the gNB can explicitly configure the UE to perform link recovery on some given SCell, or (2) the UE can be configured implicitly configured through the configuration of beam failure detection RS or new beam identification RS. The methods of SCell beam failure recovery request signal design and the methods of how gNB responses to a SCell beam failure recovery request. All the methods have technical features to complete the function of SCell beam failure recovery. According to some embodiments of the present disclosure, the UE can be configured to operate link recovery (or called beam failure recovery) on one or some given SCells implicitly based on whether beam failure reference signal or new beam identification reference signal is configured or not. The design of BFRQ message ensure proper information on beam failure of one SCell is reported to the gNB. After sending BFRQ, the UE is able to ensure the SCell recovery is successfully conducted based on the gNB's response and thus the following operation continue to fully recover one failed SCell. Those have technical features to complete the function of SCell beam failure recovery. In the embodiment of the present disclosure, an apparatus and a method of a beam failure recovery for a secondary cell (SCell) capable of providing high reliability are provided. The embodiment of the present disclosure is a combination of techniques/processes that can be adopted in 3GPP specification to create an end product.

FIG. 11 is a block diagram of an example system 700 for wireless communication, wherein a system for wireless communication as such is not according to the claimed invention. Embodiments described herein may be implemented into the system using any suitably configured hardware and/or software. FIG. 11 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated.

The application circuitry 730 may include a circuitry, such as, but not limited to, one or more single-core or multi-core processors. The processors may include any combinations of general-purpose processors and dedicated processors, such as graphics processors and application processors. The processors may be coupled with the memory/storage and configured to execute instructions stored in the memory/storage to enable various applications and/or operating systems running on the system.

The baseband circuitry 720 may include a circuitry, such as, but not limited to, one or more single-core or multi-core processors. The processors may include a baseband processor. The baseband circuitry may handle various radio control functions that enable communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multi-mode baseband circuitry. In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency.

The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the user equipment, eNB, or gNB may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC).

The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory. In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface.

In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite. In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units. If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

**Claims**

**1.** A method of a beam failure recovery for a secondary cell, SCell, the method being performed by a user equipment, UE, for which a plurality of SCells have been configured by a base station, wherein the method comprises:

> receiving a radio resource control, RRC, signaling from the base station, wherein the RRC signaling carries an indication of performing a beam failure recovery on a bandwidth part, BWP, in a first SCell of the plurality of SCells configured by the base station (420);
> receiving a higher layer parameter from the base station, wherein the higher layer parameter indicates the UE to request scheduling of a PUSCH transmission carrying a MAC CE message for reporting the index of the first SCell in the event of beam failure in the BWP in the first SCell;
> transmitting, to the base station, a beam failure recovery request, BFRQ, through a MAC CE message carried in a granted PUSCH transmission to report a beam failure in the BWP in the first SCell; and
> receiving a physical downlink control channel, PDCCH, wherein the PDCCH carries a beam failure recovery response, BFRR, in response to the BFRQ from the base station.

2. The method of claim 1, further comprising performing, by the UE, the beam failure recovery, if the UE is configured with a new beam identification reference signal, NBI RS, which indicates the UE to perform the beam failure recovery for a BWP in the first SCell.

3. The method of claim 2, wherein performing, by the UE, the beam failure recovery comprises: reporting an index of one NBI RS that is chosen by the UE based on comparing a reference symbol received power, RSRP, of the one NBI RS to a threshold.

4. The method of claim 1, further comprising performing, by the UE, the beam failure recovery, if the UE is configured with a beam failure detection reference signal, BFD RS, which indicates the UE to perform the beam failure recovery for the BWP in the first SCell.

5. A user equipment, UE, comprising:

> a memory (12);
> a transceiver (13); and
> a processor (11) coupled to the memory (12) and the transceiver (13),
> wherein the processor (11) is configured to receive a radio resource control, RRC, signaling from a base station, wherein the RRC signaling carries an indication of performing a beam failure recovery on a bandwidth part, BWP, in a first SCell of a plurality of SCells configured by the base station (420); and
> receive a higher layer parameter from the base station, wherein the higher layer parameter indicates the UE to request scheduling of a PUSCH transmission carrying a MAC CE message for reporting the index of the first SCell in the event of beam failure in the BWP in the first SCell;
> wherein the transceiver (13) is configured to:

>> transmit, to the base station, a beam failure recovery request, BFRQ, through a MAC CE message carried in a granted PUSCH transmission to report a beam failure in the BWP in the first SCell; and
>> receive a physical downlink control channel, PDCCH, wherein the PDCCH carries a beam failure recovery response, BFRR, in response to the BFRQ from the base station.

6. The UE of claim 5, wherein the processor is configured to perform the beam failure recovery if the UE is configured with a new beam identification reference signal, NBI RS, which indicates the UE to perform the beam failure recovery for the BWP in the first SCell.

7. The UE of claim 6, wherein the processor is configured to report an index of one NBI RS that is chosen by the processor based on comparing a reference symbol received power, RSRP, of the one NBI RS to a threshold.

8. The UE of claim 5, wherein the processor is configured to perform the beam failure recovery if the UE is configured with a beam failure detection reference signal, BFD RS, which indicates the UE to perform the beam failure recovery for theBWP in the first SCell.

9. A method of a beam failure recovery for a secondary cell, SCell, the method being performed by a base station,wherein the method comprises:

> transmitting a radio resource control, RRC, signaling to a user equipment, UE, for which a plurality of SCells have been configured by the base station, wherein the RRC signaling carries an indication of performing a beam failure recovery on a bandwidth part, BWP, in a first SCell of the plurality of SCells (520) configured by the base station;

transmitting a higher layer parameter to the UE, wherein the higher layer parameter indicates the UE to request scheduling of a PUSCH transmission carrying a MAC CE message for reporting the index of the first SCell in the event of beam failure in the BWP in the first SCell;

receiving a beam failure recovery request, BFRQ, for reporting a beam failure in the BWP in the first SCell through a MAC CE message carried in a granted PUSCH transmission transmitted from the UE; and

transmitting, to the UE, a physical downlink control channel, PDCCH, wherein the PDCCH carries a beam failure recovery response, BFRR, in response to the BFRQ.

10. The method of claim 9, further comprising configuring the UE with a new beam identification reference signal, NBI RS, which indicates the UE to perform the beam failure recovery for the BWP in the first SCell.

11. The method of claim 10, further comprising requesting the UE to report an index of one NBI RS that is chosen by the UE based on comparing a reference symbol received power, RSRP, of the one NBI RS to a threshold.

12. The method of claim 9, further comprising configuring the UE with a beam failure detection reference signal, BFD RS, which indicates the UE to perform the beam failure recovery for the BWP in the first SCell.

13. A base station configured to perform beam failure recovery for a secondary cell, SCell, of a plurality of SCells configured by the base station, comprising:

a memory (22);
a transceiver (23); and
a processor (21) coupled to the memory and the transceiver,
wherein the processor (21) is configured to:

transmit a radio resource control, RRC, signaling to a user equipment, UE, wherein the RRC signaling carries an indication of performing a beam failure recovery on a bandwidth part, BWP, in a first SCell of the plurality of SCells (520) configured by the base station;

transmit a higher layer parameter to the UE, wherein the higher layer parameter indicates the UE to request scheduling of a PUSCH transmission carrying a MAC CE message for reporting the index of the first SCell in the event of beam failure in the BWP in the first SCell;

receive a beam failure recovery request, BFRQ, for reporting a beam failure in the BWP in the first SCell through a MAC CE message carried in a granted PUSCH transmission transmitted from the UE; and

transmit, to the UE, a physical downlink control channel, PDCCH, wherein the PDCCH carries a beam failure recovery response, BFRR, in response to the BFRQ.

14. The base station of claim 13, wherein the processor (21) is configured to configure the UE with a new beam identification reference signal (NBI RS), which indicates the UE to perform the beam failure recovery for the BWP in the first SCell.

15. The base station of claim 14, wherein the processor (21) is configured to request the UE to report an index of one NBI RS that is chosen by the UE based on comparing a reference symbol received power (RSRP) of the one NBI RS to a threshold.

16. The base station of claim 13, wherein the processor (21) is configured to configure the UE with a beam failure detection reference signal (BFD RS), which indicates the UE to perform the beam failure recovery for the BWP in the first SCell.

**Patentansprüche**

1. Verfahren einer Strahlausfallwiederherstellung für eine Sekundärzelle, SCell, wobei das Verfahren durch eine Benutzereinrichtung, UE, durchgeführt wird, für die eine Mehrzahl von SCells durch eine Basisstation konfiguriert wurden, wobei das Verfahren Folgendes umfasst:

Empfangen einer Funkressourcensteuerungs-, RRC-, Signalgebung von der Basisstation, wobei die RRC-Signalgebung eine Anzeige zum Durchführen einer Strahlausfallwiederherstellung auf einem Bandbreitenteil, BWP, in einer ersten SCell der Mehrzahl von SCells führt, die durch die Basisstation (420) konfiguriert wurden; Empfangen eines Parameters höherer Schicht von der Basisstation, wobei der Parameter höherer Schicht der UE anzeigt, eine Planung einer PUSCH-Übertragung anzufordern, die eine MAC-CE-Nachricht zum Berichten des Index der ersten SCell im Fall eines Strahlausfalls in dem BWP in der ersten SCell führt; Übertragen, an die Basisstation, einer Strahlausfallwiederherstellungsanforderung, BFRQ, über eine in einer gewährten PUSCH-Übertragung geführte MAC-CE-Nachricht zum Berichten eines Strahlausfalls in dem BWP in der ersten SCell; und Empfangen eines physikalischen Abwärtsstrecken-Steuerkanals, PDCCH, wobei der PDCCH eine Strahlausfallwiederherstellungsantwort, BFRR, in Antwort auf die BFRQ von der Basisstation führt.

2. Verfahren nach Anspruch 1, ferner umfassend Durchführen, durch die UE, der Strahlausfallwiederherstellung, wenn die UE mit einem neuen Strahlidentifikationsreferenzsignal, NBI-RS, konfiguriert wird, das der UE anzeigt, die Strahlausfallwiederherstellung für einen BWP in der ersten SCell durchzuführen.

3. Verfahren nach Anspruch 2, wobei das Durchführen, durch die UE, der Strahlausfallwiederherstellung Folgendes umfasst: Berichten eines Index eines NBI-RS, das durch die UE basierend auf einem Vergleichen einer Referenzsymbolempfangsleistung, RSRP, des einen NBI-RS mit einem Schwellenwert ausgewählt wird.

4. Verfahren nach Anspruch 1, ferner umfassend Durchführen, durch die UE, der Strahlausfallwiederherstellung, wenn die UE mit einem Strahlausfalldetektionsreferenzsignal, BFD-RS, konfiguriert wird, das der UE anzeigt, die Strahlausfallwiederherstellung für den BWP in der ersten SCell durchzuführen.

5. Benutzereinrichtung, UE, umfassend:

einen Speicher (12); einen Sendeempfänger (13); und einen Prozessor (11), der mit dem Speicher (12) und dem Sendeempfänger (13) gekoppelt ist, wobei der Prozessor (11) zu Folgendem konfiguriert ist:

Empfangen einer Funkressourcensteuerungs-, RRC-, Signalgebung von einer Basisstation, wobei die RRC-Signalgebung eine Anzeige zum Durchführen einer Strahlausfallwiederherstellung auf einem Bandbreitenteil, BWP, in einer ersten SCell einer Mehrzahl von SCells führt, die durch die Basisstation (420) konfiguriert wurden; und Empfangen eines Parameters höherer Schicht von der Basisstation, wobei der Parameter höherer Schicht der UE anzeigt, eine Planung einer PUSCH-Übertragung anzufordern, die eine MAC-CE-Nachricht zum Berichten des Index der ersten SCell im Fall eines Strahlausfalls in dem BWP in der ersten SCell führt; wobei der Sendeempfänger (13) zu Folgendem konfiguriert ist:

Übertragen, an die Basisstation, einer Strahlausfallwiederherstellungsanforderung, BFRQ, über eine in einer gewährten PUSCH-Übertragung geführte MAC-CE-Nachricht zum Berichten eines Strahlausfalls in dem BWP in der ersten SCell; und Empfangen eines physikalischen Abwärtsstrecken-Steuerkanals, PDCCH, wobei der PDCCH eine Strahlausfallwiederherstellungsantwort, BFRR, in Antwort auf die BFRQ von der Basisstation führt.

6. UE nach Anspruch 5, wobei der Prozessor dazu konfiguriert ist, die Strahlausfallwiederherstellung durchzuführen, wenn die UE mit einem neuen Strahlidentifikationsreferenzsignal, NBI-RS, konfiguriert wird, das der UE anzeigt, die Strahlausfallwiederherstellung für den BWP in der ersten SCell durchzuführen.

7. UE nach Anspruch 6, wobei der Prozessor dazu konfiguriert ist, einen Index eines NBI-RS zu berichten, das durch den Prozessor basierend auf einem Vergleichen einer Referenzsymbolempfangsleistung, RSRP, des NBI-RS mit einem Schwellenwert ausgewählt wird.

8. UE nach Anspruch 5, wobei der Prozessor dazu konfiguriert ist, die Strahlausfallwiederherstellung durchzuführen, wenn die UE mit einem Strahlausfalldetektionsreferenzsignal, BFD-RS, konfiguriert wird, das der UE anzeigt, die Strahlausfallwiederherstellung für den BWP in der ersten SCell durchzuführen.

9. Verfahren einer Strahlausfallwiederherstellung für eine Sekundärzelle, SCell, wobei das Verfahren durch eine Basisstation durchgeführt wird, wobei das Verfahren Folgendes umfasst:

Übertragen einer Funkressourcensteuerungs-, RRC-, Signalgebung an eine Benutzereinrichtung, UE, für die eine Mehrzahl von SCells durch die Basisstation konfiguriert wurden, wobei die RRC-Signalgebung eine Anzeige zum Durchführen einer Strahlausfallwiederherstellung auf einem Bandbreitenteil, BWP, in einer ersten SCell der Mehrzahl von SCells (520) führt, die durch die Basisstation konfiguriert wurden;

Übertragen eines Parameters höherer Schicht an die UE, wobei der Parameter höherer Schicht der UE anzeigt, eine Planung einer PUSCH-Übertragung anzufordern, die eine MAC-CE-Nachricht zum Berichten des Index der ersten SCell im Fall eines Strahlausfalls in dem BWP in der ersten SCell führt;

Empfangen einer Strahlausfallwiederherstellungsanforderung, BFRQ, zum Berichten eines Strahlausfalls in dem BWP in der ersten SCell über eine in einer gewährten PUSCH-Übertragung geführte MAC-CE-Nachricht, die von der UE übertragen wird; und

Übertragen, an die UE, eines physikalischen Abwärtsstrecken-Steuerkanals, PDCCH, wobei der PDCCH eine Strahlausfallwiederherstellungsantwort, BFRR, in Antwort auf die BFRQ führt.

10. Verfahren nach Anspruch 9, ferner umfassend Konfigurieren der UE mit einem neuen Strahlidentifikationsreferenzsignal, NBI-RS, das der UE anzeigt, die Strahlausfallwiederherstellung für den BWP in der ersten SCell durchzuführen.

11. Verfahren nach Anspruch 10, ferner umfassend Auffordern der UE, einen Index eines NBI-RS zu berichten, das durch die UE basierend auf einem Vergleichen einer Referenzsymbolempfangsleistung, RSRP, des einen NBI-RS mit einem Schwellenwert ausgewählt wird.

12. Verfahren nach Anspruch 9, ferner umfassend Konfigurieren der UE mit einem Strahlausfalldetektionsreferenzsignal, BFD-RS, das der UE anzeigt, die Strahlausfallwiederherstellung für den BWP in der ersten SCell durchzuführen.

13. Basisstation, die dazu konfiguriert ist, eine Strahlausfallwiederherstellung für eine Sekundärzelle, SCell, einer Mehrzahl von SCells, die durch die Basisstation konfiguriert wurden, durchzuführen, umfassend:

einen Speicher (22);
einen Sendeempfänger (23); und
einen Prozessor (21), der mit dem Speicher und dem Sendeempfänger gekoppelt ist,
wobei der Prozessor (21) zu Folgendem konfiguriert ist:

Übertragen einer Funkressourcensteuerungs-, RRC-, Signalgebung an eine Benutzereinrichtung, UE, wobei die RRC-Signalgebung eine Anzeige zum Durchführen einer Strahlausfallwiederherstellung auf einem Bandbreitenteil, BWP, in einer ersten SCell der Mehrzahl von SCells (520) führt, die durch die Basisstation konfiguriert wurden;

Übertragen eines Parameters höherer Schicht an die UE, wobei der Parameter höherer Schicht der UE anzeigt, eine Planung einer PUSCH-Übertragung anzufordern, die eine MAC-CE-Nachricht zum Berichten des Index der ersten SCell im Fall eines Strahlausfalls in dem BWP in der ersten SCell führt;

Empfangen einer Strahlausfallwiederherstellungsanforderung, BFRQ, zum Berichten eines Strahlausfalls in dem BWP in der ersten SCell über eine in einer gewährten PUSCH-Übertragung geführte MAC-CE-Nachricht, die von der UE übertragen wird; und

Übertragen, an die UE, eines physikalischen Abwärtsstrecken-Steuerkanals, PDCCH, wobei der PDCCH eine Strahlausfallwiederherstellungsantwort, BFRR, in Antwort auf die BFRQ führt.

14. Basisstation nach Anspruch 13, wobei der Prozessor (21) dazu konfiguriert ist, die UE mit einem neuen Strahlidentifikationsreferenzsignal (NBI-RS) zu konfigurieren, das der UE anzeigt, die Strahlausfallwiederherstellung für den BWP in der ersten SCell durchzuführen.

15. Basisstation nach Anspruch 14, wobei der Prozessor (21) dazu konfiguriert ist, die UE aufzufordern, einen Index eines NBI-RS zu berichten, das durch die UE basierend auf einem Vergleichen einer Referenzsymbolempfangsleistung (RSRP) des NBI-RS mit einem Schwellenwert ausgewählt wird.

16. Basisstation nach Anspruch 13, wobei der Prozessor (21) dazu konfiguriert ist, die UE mit einem Strahlausfalldetektionsreferenzsignal (BFD-RS) zu konfigurieren, das der UE anzeigt, die Strahlausfallwiederherstellung für den BWP in der ersten SCell durchzuführen.

**Revendications**

1. Procédé de reprise après défaillance de faisceau pour une cellule secondaire, SCell, le procédé étant réalisé par un équipement d'utilisateur, UE, pour lequel une pluralité de SCells a été configurée par une station de base, le procédé comportant les étapes consistant à :

   recevoir une signalisation de gestion des ressources radioélectriques, RRC, en provenance de la station de base, la signalisation de RRC transportant une indication de réalisation d'une reprise après défaillance de faisceau sur une partie de bande passante, BWP, dans une première SCell de la pluralité de SCells configurée par la station (420) de base ;
   recevoir un paramètre de couche supérieure en provenance de la station de base, le paramètre de couche supérieure indiquant à l'UE qu'il convient de demander la programmation d'une transmission de PUSCH transportant un message de CE MAC servant à rendre compte de l'indice de la première SCell dans l'éventualité d'une défaillance de faisceau dans la BWP dans la première SCell ;
   transmettre, à la station de base, une demande de reprise après défaillance de faisceau, BFRQ, par l'intermédiaire d'un message de CE MAC transporté dans une transmission de PUSCH octroyée pour rendre compte d'une défaillance de faisceau dans la BWP dans la première SCell ; et
   recevoir un canal physique de commande de liaison descendante, PDCCH, le PDCCH transportant une réponse de reprise après défaillance de faisceau, BFRR, en réponse à la BFRQ provenant de la station de base.

2. Procédé selon la revendication 1, comportant en outre la réalisation, par l'UE, de la reprise après défaillance de faisceau, si l'UE est configuré avec un signal de référence d'identification de nouveau faisceau, NBI RS, qui indique à l'UE qu'il convient de réaliser la reprise après défaillance de faisceau pour une BWP dans la première SCell.

3. Procédé selon la revendication 2, la réalisation, par l'UE, de la reprise après défaillance de faisceau comportant : le fait de rendre compte d'un indice d'un NBI RS qui est choisi par l'UE d'après une comparaison d'une puissance reçue de symbole de référence, RSRP, du NBI RS considéré à un seuil.

4. Procédé selon la revendication 1, comportant en outre la réalisation, par l'UE, de la reprise après défaillance de faisceau, si l'UE est configuré avec un signal de référence de détection de défaillance de faisceau, BFD RS, qui indique à l'UE qu'il convient de réaliser la reprise après défaillance de faisceau pour la BWP dans la première SCell.

5. Équipement d'utilisateur, UE, comportant :

   une mémoire (12) ;
   un émetteur-récepteur (13) ; et
   un processeur (11) couplé à la mémoire (12) et à l'émetteur-récepteur (13), le processeur (11) étant configuré pour recevoir une signalisation de gestion des ressources radioélectriques, RRC, en provenance d'une station de base, la signalisation de RRC transportant une indication de réalisation d'une reprise après défaillance de faisceau sur une partie de bande passante, BWP, dans une première SCell d'une pluralité de SCells configurée par la station (420) de base ; et
   recevoir un paramètre de couche supérieure en provenance de la station de base, le paramètre de couche supérieure indiquant à l'UE qu'il convient de demander la programmation d'une transmission de PUSCH transportant un message de CE MAC servant à rendre compte de l'indice de la première SCell dans l'éventualité d'une défaillance de faisceau dans la BWP dans la première SCell ;
   l'émetteur-récepteur (13) étant configuré pour :

   transmettre, à la station de base, une demande de reprise après défaillance de faisceau, BFRQ, par l'intermédiaire d'un message de CE MAC transporté dans une transmission de PUSCH octroyée pour rendre compte d'une défaillance de faisceau dans la BWP dans la première SCell ; et
   recevoir un canal physique de commande de liaison descendante, PDCCH, le PDCCH transportant une réponse de reprise après défaillance de faisceau, BFRR, en réponse à la BFRQ provenant de la station de base.

6. UE selon la revendication 5, le processeur étant configuré pour réaliser la reprise après défaillance de faisceau si l'UE est configuré avec un signal de référence d'identification de nouveau faisceau, NBI RS, qui indique à l'UE qu'il convient de réaliser la reprise après défaillance de faisceau pour la BWP dans la première SCell.

7. UE selon la revendication 6, le processeur étant configuré pour rendre compte d'un indice d'un NBI RS qui est choisi par le processeur d'après une comparaison d'une puissance reçue de symbole de référence, RSRP, du NBI RS considéré à un seuil.

8. UE selon la revendication 5, le processeur étant configuré pour réaliser la reprise après défaillance de faisceau si l'UE est configuré avec un signal de référence de détection de défaillance de faisceau, BFD RS, qui indique à l'UE qu'il convient de réaliser la reprise après défaillance de faisceau pour la BWP dans la première SCell.

9. Procédé de reprise après défaillance de faisceau pour une cellule secondaire, SCell, le procédé étant réalisé par une station de base, le procédé comportant les étapes consistant à :

transmettre une signalisation de gestion des ressources radioélectriques, RRC, à un équipement d'utilisateur, UE, pour lequel une pluralité de SCells a été configurée par la station de base, la signalisation de RRC transportant une indication de réalisation d'une reprise après défaillance de faisceau sur une partie de bande passante, BWP, dans une première SCell de la pluralité de SCells (520) configurée par la station de base ;
transmettre un paramètre de couche supérieure à l'UE, le paramètre de couche supérieure indiquant à l'UE qu'il convient de demander la programmation d'une transmission de PUSCH transportant un message de CE MAC servant à rendre compte de l'indice de la première SCell dans l'éventualité d'une défaillance de faisceau dans la BWP dans la première SCell ;
recevoir une demande de reprise après défaillance de faisceau, BFRQ, pour rendre compte d'une défaillance de faisceau dans la BWP dans la première SCell par l'intermédiaire d'un message de CE MAC transporté dans une transmission de PUSCH octroyée transmise en provenance de l'UE ; et
transmettre, à l'UE, un canal physique de commande de liaison descendante, PDCCH, le PDCCH transportant une réponse de reprise après défaillance de faisceau, BFRR, en réponse à la BFRQ.

10. Procédé selon la revendication 9, comportant en outre le fait de configurer l'UE avec un signal de référence d'identification de nouveau faisceau, NBI RS, qui indique à l'UE qu'il convient de réaliser la reprise après défaillance de faisceau pour la BWP dans la première SCell.

11. Procédé selon la revendication 10, comportant en outre le fait de demander à l'UE de rendre compte d'un indice d'un NBI RS qui est choisi par l'UE d'après une comparaison d'une puissance reçue de symbole de référence, RSRP, du NBI RS considéré à un seuil.

12. Procédé selon la revendication 9, comportant en outre le fait de configurer l'UE avec un signal de référence de détection de défaillance de faisceau, BFD RS, qui indique à l'UE qu'il convient de réaliser la reprise après défaillance de faisceau pour la BWP dans la première SCell.

13. Station de base configurée pour réaliser une reprise après défaillance de faisceau pour une cellule secondaire, SCell, d'une pluralité de SCells configurée par la station de base, comportant :

une mémoire (22) ;
un émetteur-récepteur (23) ; et
un processeur (21) couplé à la mémoire et à l'émetteur-récepteur, le processeur (21) étant configuré pour :

transmettre une signalisation de gestion des ressources radioélectriques, RRC, à un équipement d'utilisateur, UE, la signalisation de RRC transportant une indication de réalisation d'une reprise après défaillance de faisceau sur une partie de bande passante, BWP, dans une première SCell de la pluralité de SCells (520) configurée par la station de base ;
transmettre un paramètre de couche supérieure à l'UE, le paramètre de couche supérieure indiquant à l'UE qu'il convient de demander la programmation d'une transmission de PUSCH transportant un message de CE MAC servant à rendre compte de l'indice de la première SCell dans l'éventualité d'une défaillance de faisceau dans la BWP dans la première SCell ;
recevoir une demande de reprise après défaillance de faisceau, BFRQ, pour rendre compte d'une défaillance de faisceau dans la BWP dans la première SCell par l'intermédiaire d'un message de CE MAC transporté dans une transmission de PUSCH octroyée transmise en provenance de l'UE ; et

transmettre, à l'UE, un canal physique de commande de liaison descendante, PDCCH, le PDCCH transportant une réponse de reprise après défaillance de faisceau, BFRR, en réponse à la BFRQ.

14. Station de base selon la revendication 13, le processeur (21) étant configuré pour configurer l'UE avec un signal de référence d'identification de nouveau faisceau (NBI RS), qui indique à l'UE qu'il convient de réaliser la reprise après défaillance de faisceau pour la BWP dans la première SCell.

15. Station de base selon la revendication 14, le processeur (21) étant configuré pour demander à l'UE de rendre compte d'un indice d'un NBI RS qui est choisi par l'UE d'après une comparaison d'une puissance reçue de symbole de référence (RSRP) du NBI RS considéré à un seuil.

16. Station de base selon la revendication 13, le processeur (21) étant configuré pour configurer l'UE avec un signal de référence de détection de défaillance de faisceau (BFD RS), qui indique à l'UE qu'il convient de réaliser la reprise après défaillance de faisceau pour la BWP dans la première SCell.

001

Information bits → Encoder 002 → Modulator 003 → S/P 004 → RE mapping & Precoder 005 → ⋮ → IFFT 006 → P/S 007 → Tx Unit 008

FIG. 1

011

Received signals → Rx Unit 012 → P/S 013 → FFT 014 → RE demapping 015 → Demod 016 → Decoder 017 → Information bits

018

FIG. 2

User Equipment 10

Processor 11 — Transceiver 13

Memory 12

Base Station 20

Processor 21 — Transceiver 23

Memory 22

FIG. 3

400

410 Being configured a plurality of SCells by a base station

420 Being configured to perform a beam failure recovery on a first SCell of the SCells by the base station

**FIG. 4**

500

510 Configuring, to a user equipment (UE), a plurality of SCells

520 Configuring the UE to perform a beam failure recovery on a first SCell of the SCells

**FIG. 5**

| R | R | R | Serving Cell ID | Oct 1 |
|---|---|---|---|---|
| R | R | | Indicator of new beam RS | Oct 2 |

**FIG. 6**

| Number of Cells | | Serving Cell 1 | | | Oct1 |
|---|---|---|---|---|---|
| R | R | Indicator of new beam RS 1 | | | Oct2 |
| R | R | R | Serving Cell ID 2 | | Oct3 |
| R | R | Indicator of new beam RS 3 | | | Oct4 |
| ... | | | | | |
| R | R | R | Serving Cell ID M | | Oct2M-1 |
| R | R | Indicator of new beam RS M | | | Oct2M |

## FIG. 7

| R | R | R | Serving Cell ID | Oct 1 |
|---|---|---|---|---|

## FIG. 8

| $C_7$ | $C_6$ | $C_5$ | $C_4$ | $C_3$ | $C_2$ | $C_1$ | R | Oct 1 |
|---|---|---|---|---|---|---|---|---|
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |
| R | R | Indicator of new beam RS | | | | | | Oct 5 |

## FIG. 9

| C7 | C6 | C5 | C4 | C3 | C2 | C1 | R | Oct 1 |
|----|----|----|----|----|----|----|----|-------|
| C15 | C14 | C13 | C12 | C11 | C10 | C9 | C8 | Oct 2 |
| C23 | C22 | C21 | C20 | C19 | C18 | C17 | C16 | Oct 3 |
| C31 | C30 | C29 | C28 | C27 | C26 | C25 | C24 | Oct 4 |
| R | R | Indicator of new beam RS1 | | | | | | Oct 5 |
| ... | | | | | | | | |
| R | R | Indicator of new beam RS M | | | | | | Oct M+4 |

## FIG. 10

700

| Display 750 | Camera 760 | Sensor 770 | I/O interface 780 |

Memory/storage 740

Application circuitry 730

Baseband circuitry 720

RF circuitry 710

## FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 201915654 A1
- WO 2019027294 A1

- WO 2019032882 A1

### Non-patent literature cited in the description

- **QUALCOMM INCORPORATED.** Enhancements on Multi-beam Operation. *3GPP DRAFT; R1-1907290 ENHANCEMENTS ON MULTI-BEAM OPERATION, 3RD GENERATION PARTNERSHIP PROJECT (3GPP), MOBILE COMPETENCE CENTRE; 650, ROUTE DES LUCIOLES; F-06921 SOPHIA-ANTIP-OLIS CEDEX,* 13 May 2019, vol. RAN WG1 (Reno, URL:http://www.3gpp.org/ftp/Meetings%5F3GPP%5FSYNC/RAN1/Docs/R1%2D1907 290%2Ezip
- **INTEL CORPORATION.** Summary 3 on SCell BFR and L1-SINR. *3GPP DRAFT; R1-1905844 SUMMARY ON SCELL BFR AND L1-SINR_V7, 3RD GEN-ERATION PARTNERSHIP PROJECT (3GPP), MO-BILE COMPETENCE CENTRE; 650, ROUTE DES LUCIOLES; F-06921 SOPHIA-ANTIPOLIS CEDEX,* 15 April 2019, vol. RAN WG1 (Xi an, URL:ht-tp://www.3gpp.org/ftp/tsg%5Fran/ WG1%5FRL1/TSGR1%5F96b/Docs/R1%2D19058 44%2Ezip

- **SAMSUNG.** Enhancements on multi-beam operations. *3GPP DRAFT; R1-1902306 R16 MULTI-BEAM, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX,* 15 February 2019, vol. RAN WG1 (Athens, http:// www.3gpp.org/ftp/tsg%5Fran/WG1%5FRL1/TSGR 1%5F96/Docs/R1%2D1902306%2Ezip
- **HUAWEI et al.** Beam failure recovery for SCell. *3GPP TSG RAN WG1 Meeting #96bis R1-1903977,* 12 April 2019